(19) Europäisches Patentamt / European Patent Office / Office européen des brevets

(11) **EP 4 607 611 A1**

(12) **EUROPEAN PATENT APPLICATION**

(43) Date of publication:
**27.08.2025 Bulletin 2025/35**

(51) International Patent Classification (IPC):
*H01M 4/36* (2006.01)   *H01M 4/38* (2006.01)
*H01M 4/485* (2010.01)   *H01M 4/587* (2010.01)
*H01M 4/62* (2006.01)   *H01M 10/0525* (2010.01)
*H01M 4/02* (2006.01)

(21) Application number: 25158937.0

(22) Date of filing: **19.02.2025**

(52) Cooperative Patent Classification (CPC):
H01M 4/366; H01M 4/364; H01M 4/386;
H01M 4/485; H01M 4/587; H01M 4/625;
H01M 10/0525; H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.02.2024  KR 20240024130
18.02.2025  KR 20250021024

(71) Applicant: **SK On Co., Ltd.**
**Seoul 03161 (KR)**

(72) Inventors:
• **KIM, Seon Ah**
  **34124 Daejeon (KR)**
• **PARK, Yang Kyu**
  **34124 Daejeon (KR)**
• **LEE, Jong Hyuk**
  **34124 Daejeon (KR)**
• **CHUNG, Ju Ho**
  **34124 Daejeon (KR)**

(74) Representative: **Stolmár & Partner
Patentanwälte PartG mbB
Blumenstraße 17
80331 München (DE)**

(54) **ANODE ACTIVE MATERIAL AND LITHIUM SECONDARY BATTERY INCLUDING THE SAME**

(57)   An anode active material according to embodiments of the present disclosure includes a silicon-based active material including core particles and a carbon coating which covers a surface of the core particles. An onset temperature of the silicon-based active material measured through a thermogravimetric analysis method is greater than 350°C and less than 390°C, and a ratio of a change value of a weight loss rate to a change value of a temperature of the silicon-based active material measured through a differential thermogravimetric analysis method is 0.000050 to 0.000150.

[FIG. 1]

**Description**

[BACKGROUND OF THE INVENTION]

1. Field of the Invention

The present disclosure relates to an anode active material and a lithium secondary battery including the same.

2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as a hybrid vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight.

The lithium secondary battery includes, for example, a cathode and an anode, and may further include a separation membrane (separator) between the cathode and the anode. The anode may include a silicon-based material as anode active material particles for securing high energy density.

However, in the case of the silicon-based material, mechanical and chemical damage such as cracks of the particles may occur due to charging and discharging, and contact between the anode active material particles may be decreased. Therefore, it is necessary to develop an anode active material capable of securing lifespan stability and output/capacity characteristics.

[SUMMARY OF THE INVENTION]

An object of the present disclosure is to provide an anode active material for a lithium secondary battery having improved electrical characteristics and activity.

Another object of the present disclosure is to provide a lithium secondary battery having improved electrical characteristics and activity, which includes the anode active material.

To achieve the above objects, according to an aspect of the present disclosure, there is provided an anode active material including: a silicon-based active material which includes core particles and a carbon coating formed on a surface of the core particles to cover at least a portion thereof, wherein the silicon-based active material satisfies Equations 1 and 2 below.

$$[\text{Equation 1}]$$

$$350°C < \text{Onset} < 390°C$$

In Equation 1, the Onset is a starting temperature at which a weight change peak appears in a thermogravimetric analysis (TGA) graph of the silicon-based active material measured at a heating rate of 5°C/min from 25°C to 450°C.

$$[\text{Equation 2}]$$

$$0.000050 \leq \text{Ds} \leq 0.000150$$

In Equation 2, the Ds is a ratio of a change value of a weight loss rate to a change value of a temperature between 350°C and 450°C measured in a derivative thermogravimetry (DTG) graph of the silicon-based active material obtained through the TGA graph.

In some embodiments, in Equation 1, the Onset may be in a range of 360°C≤Onset≤385°C.

In some embodiments, in Equation 2, the Ds may be in a range of 0.000050≤Ds≤0.000120.

In some embodiments, a content of the carbon coating may be 1% by weight to 10% by weight based on a total weight of the silicon-based active material.

In some embodiments, Q defined by Equation 3 may be greater than 0 and 1.0 or less:

[Equation 3]

$$Q=C_W/D_{50}$$

In Equation 3, the $C_W$ is a numerical value of a content (% by weight) of the carbon coating based on the total weight of the silicon-based active material, and the $D_{50}$ is a numerical value of a particle diameter at a volume fraction of 50% in a volume particle size distribution of the silicon-based active material.

In some embodiments, an SPAN defined by Equation 4 may be 1.0 or less:

[Equation 4]

$$SPAN=\{(D_{90}-D_{10})\}/D_{50}$$

In Equation 4, when the particle diameters are accumulated in descending order in a volume particle size distribution of the silicon-based active material, the $D_{50}$ is a particle diameter at a volume fraction of 50%, the $D_{10}$ is a particle diameter at a volume fraction of 10%, and the $D_{90}$ is a particle diameter at a volume fraction of 90%.

In some embodiments, the silicon-based active material may have a specific surface area of 1 $m^2/g$ to 3 $m^2/g$.

In some embodiments, the silicon-based active material may have a median particle diameter of 4 $\mu$m to 10 $\mu$m.

In some embodiments, the carbon coating may include amorphous carbon.

In some embodiments, the anode active material may further include a carbon-based active material.

In some embodiments, the carbon-based active material may include artificial graphite, natural graphite, or a mixture thereof.

In some embodiments, a content of the silicon-based active material may be less than 50% by weight based on a total weight of the anode active material.

In some embodiments, the silicon-based active material may have a tap density of 0.90 g/cc to 1.20 g/cc, which is measured by tapping 3,000 times.

In some embodiments, the core particles may include $SiO_x(0<x<2)$.

According to another aspect of the present disclosure, there is provided a lithium secondary battery including: an anode which includes the anode active material according to the above-described embodiments; and a cathode disposed to face the anode.

The anode active material according to exemplary embodiments of the present disclosure may include a silicon-based active material including a carbon coating. A capacity and an energy density of the anode may be improved by the silicon-based active material. Structural stability of the silicon oxide particles may be improved by the carbon coating, and a side reaction with an electrolyte may be suppressed, thereby enhancing lifespan characteristics of the lithium secondary battery.

A weight loss temperature of the silicon-based active material measured through the thermogravimetric analysis method and a weight change amount depending on a temperature change measured through the differential thermogravimetric analysis method may be adjusted in a predetermined range. Accordingly, an irreversible capacity may be reduced, thereby enhancing the lifespan characteristics, and improving output and low-temperature capacity characteristics.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic plan view of a lithium secondary battery according to exemplary embodiments;
FIG. 2 is a schematic cross-sectional view of the lithium secondary battery according to exemplary embodiments;
FIG. 3 is a thermogravimetric analysis (TGA) graph of silicon-based active materials according to examples and comparative examples; and
FIG. 4 is a derivative thermogravimetry (DTG) graph of the silicon-based active materials according to the examples and comparative examples.

[DETAILED DESCRIPTION OF THE INVENTION]

According to embodiments of the present disclosure, an anode active material including a silicon-based active material is provided.

According to embodiments of the present disclosure, an anode including the anode active material and a lithium secondary battery including the same are provided.

The lithium secondary battery according to the embodiments of the present disclosure may be widely applied to green technology fields such as an electric vehicle, and a battery charging station, as well as other solar power generation and wind power generation using the batteries. In addition, the lithium secondary battery according to the embodiments of the present disclosure may be used in an eco-friendly electric vehicle, and a hybrid vehicle, etc., which are intended to prevent climate change by suppressing air pollution and greenhouse gas emissions.

The terms "upper portion," "lower portion," "upper surface," "lower surface," etc. as used herein are intended to describe the relative positional relationship of the respective components and do not mean an absolute upper-lower relationship.

Hereinafter, embodiments of the present disclosure will be described in detail. However, these embodiments are merely an example, and the present disclosure is not limited to the specific embodiments described as the example.

The anode active material for a lithium secondary battery according to the embodiments of the present disclosure (hereinafter, may be abbreviated as an "anode active material") may include a silicon-based active material.

The silicon-based active material includes core particles and a carbon coating formed on a surface of the core particles to cover at least a portion thereof.

According to exemplary embodiments, the core particles may include silicon oxide particles. The silicon oxide particles may include a silicon oxide ($SiO_x$, $0<x<2$).

In one embodiment, the silicon oxide particles may include metal-doped SiOx. For example, the silicon oxide ($SiO_x$, $0<x<2$) may include a lithium compound or a magnesium compound. The $SiO_x$ may be pretreated with lithium or magnesium, and may include, for example, lithium silicate or magnesium silicate.

The silicone oxide has a high energy density, such that an energy density and a reversible capacity of the anode may be increased. Accordingly, initial efficiency and charge/discharge capacities of the lithium secondary battery may be improved.

In one embodiment, the core particles may further include silicon (Si), a silicon-carbon composite, or a silicon-metal alloy. These may be used alone or in combination of two or more thereof.

The carbon coating may block direct contact between the core particles and an electrolyte, thereby suppressing a side reaction caused by the electrolyte and an occurrence of crack, and may inhibit pulverization of the core particles and an increase in the irreversible capacity caused by the side reaction. In addition, the conductivity of the silicon-based active material may be increased by the carbon coating, and the lifespan characteristics and output characteristics of the lithium secondary battery may be improved.

In one embodiment, the carbon coating may be formed on the core particles by chemical vapor deposition (CVD), physical vapor deposition (PVD), or thermal deposition of a hydrocarbon gas. For example, the carbon coating may be formed by depositing hydrocarbon such as methane, ethylene or acetylene, etc., or a coal-based material such as pitch or coal tar, etc. on the core particles.

In some embodiments, the carbon coating may include amorphous carbon or crystalline carbon.

For example, the carbon coating may include amorphous carbon such as hard carbon, soft carbon, calcined cokes, mesophase pitch carbide, etc., and/or crystalline carbon such as natural graphite, artificial graphite, etc. These may be used alone or in combination of two or more thereof.

In one embodiment, the carbon coating may include amorphous carbon, and may include, for example, hard carbon and/or soft carbon. The amorphous carbon has high mechanical and chemical stabilities, such that an occurrence of crack due to charging and discharging or an external impact may be suppressed.

According to exemplary embodiments, the silicon-based active material satisfies Equation 1.

$$[\text{Equation 1}]$$

$$350°C < \text{Onset} < 390°C$$

In Equation 1, the Onset is an onset temperature of the silicon-based active material measured by thermogravimetric analysis (TGA).

The onset temperature of the silicon-based active material may be a temperature at which a weight of the silicon-based active material starts to decrease in the TGA analysis. For example, the onset temperature may mean a starting temperature at which a weight change peak appears in a TGA graph of the silicon-based active material.

The onset temperature of the silicon-based active material may be measured at a heating rate of 5°C/min from 25°C to 450°C in an air atmosphere. For example, the onset temperature of the silicon-based active material may be measured through ASTM E2550.

A microstructure of the carbon coating may be quantitatively evaluated through the onset temperature of the silicon-based active material. Within the above onset range, the carbon coating may have a structure in which it is densely formed on the core particles. Accordingly, a resistance of the silicon-based active material may be reduced, and the output characteristics and low-temperature capacity characteristics may be improved.

For example, when the carbon coating grows in a shape of local islands on the core particles, the onset temperature of the silicon-based active material may deviate form the range of Equation 1. In this case, the density and uniformity of the carbon coating are decreased, such that the silicon-based active material may become structurally unstable, and the output characteristics, high-temperature storage characteristics, and lifespan characteristics of the lithium secondary battery may be decreased.

According to exemplary embodiments, the silicon-based active material satisfies Equation 2.

[Equation 2]

$$0.000050 \leq Ds \leq 0.000150$$

In Equation 2, the Ds is a ratio of a change value of a weight loss rate to a change value of a temperature between 350°C and 450°C measured in a derivative thermogravimetry (DTG) graph of the silicon-based active material.

The DTG graph may be obtained through the TGA graph. For example, the DTG graph of the silicon-based active material may be obtained by differentiating a curve of the TGA graph of the silicon-based active material. For example, the DTG graph of the silicon-based active material may be measured through ASTM E1131.

The unit of an x-axis of the TGA graph may be a temperature (°C) and the unit of a y-axis may be a mass fraction (wt%). The unit of the x-axis of the DTG graph may be the temperature (°C) and the unit of the y-axis may be a weight change rate (wt%/°C).

The Ds is a ratio (e.g., a slope of the DTG curve) of a change value of the weight change rate (e.g., a weight loss rate) to a change value of the temperature in the DTG graph of the silicon-based active material. For example, the Ds is a dimensionless value, and may be a value obtained by removing the unit from a value obtained by dividing a difference between a value of the weight change rate at 450°C and a value of the weight change rate at 350°C by 100°C.

By using the Ds, density of the carbon coating and adhesion to the core particles, etc. may be quantitatively measured. Within the range of Equation 2 above, a denser and more uniform carbon coating may be formed on the core particles, and the microstructure of the carbon coating may be more stabilized. Thereby, volume expansion of the silicon-based active material due to charging and discharging, and detachment and peeling of the anode may be suppressed, as well as the high-temperature stability, output characteristics, and lifespan characteristics of the lithium secondary battery may be improved.

In one embodiment, in Equation 1, the Onset may be in a range of 360°C≤Onset≤385°C, 360°C≤Onset≤380°C, 365°C≤Onset≤380°C, or 370°C≤Onset≤380°C. Within the above range, a denser carbon coating may be formed, as well as the initial capacity and efficiency, and low-temperature capacity characteristics of the lithium secondary battery may be further improved.

In one embodiment, in Equation 2, the Ds may be in a range of 0.000050≤Ds≤0.000120, 0.000055≤Ds≤0.000100, 0.000060≤Ds≤0.000090, or 0.000060≤Ds≤0.000080. Within the above range, the density of the carbon coating and the adhesion to the core particles may be further enhanced, as well as the lifespan characteristics, high-temperature storage characteristics and output characteristics of the lithium secondary battery may be further improved.

In some embodiments, Q defined by Equation 3 may be greater than 0 and 1.0 or less.

[Equation 3]

$$Q = C_W / D_{50}$$

In Equation 3, the $C_W$ is a numerical value of a content (wt%) of the carbon coating based on a total weight of the silicon-based active material. The $D_{50}$ is a numerical value of a particle diameter at a volume fraction of 50% in a volume particle size distribution of the silicon-based active material.

In Equation 3, the $D_{50}$ and $C_W$ are each dimensionless values. For example, the $D_{50}$ may be a value obtained by removing the unit from a median particle diameter of the silicon-based active material measured in units of $\mu$m. For example, the $C_W$ may be a value obtained by removing the unit from the content of the carbon coating measured in units of wt%.

Within the above range, the content of the carbon coating and a reaction area of the silicon-based active material may be appropriately secured. Therefore, a decrease in the reaction and an increase in the resistance of lithium ions may be suppressed, as well as thermal and chemical stabilities, and mechanical properties may be improved, thereby inhibiting the volume expansion and an occurrence of crack due to charging and discharging.

In some embodiments, the content of the carbon coating may be measured using the thermogravimetric analysis (TGA). For example, the content of the carbon coating may be measured by performing heat treatment on the silicon-based active material and measuring the weight change due to the heat treatment.

In one embodiment, the content of the carbon coating may be measured under a condition of a heating rate of 5°C/min from 25°C to 900°C in an air atmosphere. For example, a reduction amount of the minimum weight of the silicon-based active material in a section of 500°C to 600°C based on the weight of the silicon-based active material at 25°C may be calculated as the content of the carbon coating.

In one embodiment, the Q may be 0.10 to 0.90, 0.15 to 0.85, 0.20 to 0.80, or 0.20 to 0.50. Within the above range, the lifespan characteristics and output characteristics of the lithium secondary battery may be further improved.

In some embodiments, the content of the carbon coating may be 1 wt% to 10 wt% based on the total weight of the silicon-based active material. Within the above range, the volume change of the core particle may be suppressed by the carbon coating while inhibiting an increase in the internal resistance of the anode active material, and the energy density of the anode active material may be further improved.

In one embodiment, the content of the carbon coating may be 1 wt% to 8 wt%, 1 wt% to 6 wt%, or 1.5 wt% to 5 wt% based on the total weight of the silicon-based active material.

In some embodiments, the median particle diameter ($D_{50}$) of the silicon-based active material may be 4 $\mu$m to 10 $\mu$m. Within the above range, while the anode active material has a high energy density, the volume expansion may be suppressed, and adhesion between an anode active material layer and an anode current collector may be improved.

In one embodiment, the silicon-based active material may have a $D_{50}$ of 5 $\mu$m to 8 $\mu$m, or 6 $\mu$m to 7 $\mu$m.

In some embodiments, the silicon-based active material may have a $D_{10}$ of 3 $\mu$m or more, for example, 3 $\mu$m to 5 $\mu$m, or 3.5 $\mu$m to 4.5 $\mu$m. The $D_{10}$ is a particle diameter at a volume fraction of 10% when the particle sizes are accumulated in descending order in the volume particle size distribution of the silicon-based active material. Within the above range, an increase in the side reaction due to the pulverized particles may be suppressed, and the lifespan characteristics and high-temperature stability of the lithium secondary battery may be further improved.

In some embodiments, the silicon-based active material may have a $D_{90}$ of 14 $\mu$m or less, for example, 8 $\mu$m to 14 $\mu$m, or 9 $\mu$m to 10 $\mu$m. The $D_{90}$ is a particle diameter at a volume fraction of 90% when the particle sizes are accumulated in descending order in the volume particle size distribution of the silicon-based active material. Within the above range, packing characteristics of the silicon-based active material may be further improved, and the energy density, capacity and output characteristics of the anode active material may be further enhanced.

In one embodiment, the silicon-based active material may have a minimum particle diameter ($D_{min}$) of 1.0 $\mu$m or more, or 2.0 $\mu$m or more. The minimum particle diameter may be a diameter of the smallest particle in the volume particle size distribution of the silicon-based active material. For example, the minimum particle diameter may be the smallest value among x-intercepts of the volume particle size distribution curve of the silicon-based active material.

Within the above range, the pulverized particles in the silicon-based active material may be reduced, such that a side reaction and an occurrence of crack due to charging and discharging may be suppressed, and a decrease in the energy density due to pulverization of the core particles may be prevented.

In one embodiment, the silicon-based active material may have a maximum particle diameter ($D_{max}$) of 40.0 $\mu$m or less, or 35.0 $\mu$m or less. The maximum particle diameter may be a diameter of the largest particle in the volume particle size distribution of the silicon-based active material. For example, the maximum particle diameter may be a particle diameter at a volume fraction of 99.9% when the particle sizes are accumulated in descending order in the volume particle size distribution curve of the silicon-based active material.

Within the above range, the packing characteristics of the silicon-based active material may be improved, and the density of the anode may be further increased. In addition, a movement distance of lithium ions in the silicon-based active material may be shortened, such that the output characteristics and capacity characteristics may be further improved.

In one embodiment, the particle size distribution of the silicon-based active material may be adjusted through a milling, pulverization or classification process. For example, the particle size distribution of the silicon-based active material may be adjusted through a ball mill, a jet mill, a roller mill, a hammer mill, a high energy mill, a vibration mill, a stirred mill, an attrition mill, an air classifying mill or the like.

In some embodiments, an SPAN of the silicon-based active material defined by Equation 4 may be 1.0 or less.

[Equation 4]

$$SPAN = \{(D_{90} - D_{10})\}/D_{50}$$

When the SPAN value is 1.0 or less, the silicon-based active material has a narrower particle size distribution, such that the output characteristics and capacity characteristics of the lithium secondary battery may be further improved, while suppressing an increase in the volume and thickness of the anode.

In one embodiment, the SPAN of the silicon-based active material may be 0.70 to 1.00, 0.80 to 0.95, or 0.80 to 0.90. Within the above range, the packing density of the silicon-based active material and contact between the anode active material particles may be further improved.

In some embodiments, the silicon-based active material may have a specific surface area of 1 $m^2$/g to 3 $m^2$/g, 1.2 $m^2$/g to 3.0 $m^2$/g, 1.3 $m^2$/g to 2.5 $m^2$/g, or 1.4 $m^2$/g to 2.0 $m^2$/g. For example, the specific surface area may be measured by the Brunauer-Emmett-Teller (BET) measurement method by nitrogen gas adsorption using a specific surface area measuring device.

Within the above range, a reaction area of the silicon oxide particles may be appropriately adjusted such that intercalation and deintercalation of lithium ions may be smoothly performed while suppressing a side reaction to the electrolyte. Accordingly, the charge/discharge capacities and fast charging performance may be enhanced, while improving the lifespan characteristics of the lithium secondary battery.

In some embodiments, the silicon-based active material may have a tap density of 0.90 g/cc to 1.20 g/cc. The tap density may be measured by putting 20 g of the silicon-based active material into a 100 ml measuring cylinder and then tapping 3,000 times.

Within the above range, a diffusion path of lithium ions may be shortened, and a packing density of the anode may be increased. Therefore, electrochemical characteristics may be further improved while preventing structural collapse and defects of the anode active material.

The anode active material may further include a carbon-based active material. For example, the anode active material may include a mixture of the silicon-based active material and the carbon-based active material.

In some embodiments, the carbon-based active material may include amorphous carbon such as calcined cokes, mesophase pitch carbide, hard carbon, soft carbon, etc., and/or crystalline carbon such as natural graphite, artificial graphite, etc. These may be used alone or in combination of two or more thereof.

In one embodiment, the carbon-based active material may include artificial graphite, natural graphite, or a mixture thereof. Accordingly, high-temperature storage characteristics and high-temperature lifespan characteristics of the lithium secondary battery may be improved together without decreasing the energy density and capacity thereof.

In some embodiments, a content of the silicon-based active material may be less than 50 wt% based on the total weight of the anode active material. Within the above range, expansion of the anode active material and short circuit within the electrode may be suppressed, and the lifespan characteristics and high-temperature stability of the lithium secondary battery may be further improved.

In one embodiment, the content of the silicon-based active material may be greater than 0 wt% and 40 wt% or less, 1 wt% to 35 wt%, 3 wt% to 30 wt%, or 5 wt% to 20 wt% based on the total weight of the anode active material. Within the above range, a deterioration in the anode active material may be further suppressed, and the energy density and capacity characteristics may be further improved, while enhancing the lifespan characteristics and stability of the lithium secondary battery.

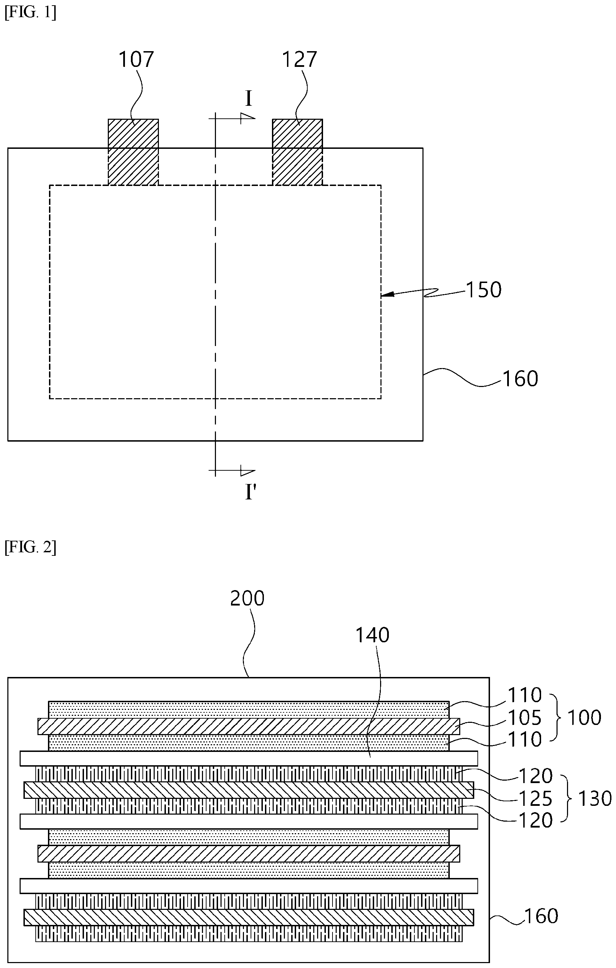

FIGS. 1 and 2 are a schematic plan view and a cross-sectional view of a secondary battery according to exemplary embodiments, respectively. For example, FIG. 2 is a cross-sectional view taken on line I-I' shown in FIG. 1 in a thickness direction of the battery.

Referring to FIGS. 1 and 2, a lithium secondary battery may include a cathode 100 and an anode 130 disposed to face the cathode 100.

The cathode 100 may include a cathode current collector 105 and a cathode active material layer 110 formed on at least one surface of the cathode current collector 105.

According to exemplary embodiments, the cathode active material layer 110 may be formed on both surfaces (e.g., upper and lower surfaces) of the cathode current collector 105. For example, the cathode active material layer 110 may be formed on the upper and lower surfaces of the cathode current collector 105, respectively.

The cathode current collector 105 may include stainless steel, nickel, aluminum, titanium or an alloy thereof. The cathode current collector 105 may also include aluminum or stainless steel subjected to surface treatment with carbon, nickel, titanium or silver.

The cathode active material layer 110 may include a cathode active material, a binder, and/or a conductive material. For example, a cathode slurry may be prepared by mixing the cathode active material with a binder and/or a conductive material in a solvent, followed by stirring the same. The cathode current collector 105 may be coated with the cathode slurry, followed by compressing and drying to form the cathode active material layer 110.

The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

The cathode active material may include a lithium-transition metal oxide represented by Formula 1 below.

[Formula 1]

$$Li_aNi_bM_{1-b}O_2$$

In Formula 1, a and b may satisfy $0.95 \leq a \leq 1.05$, $b \geq 0.5$, and M may be at least one element of Na, Mg, Ca, Y, Ti, Sr, Hf, V, Nb, Ta, Cr, Mo, W, Mn, Co, Fe, Cu, Ag, Zn, B, Al, Ga, C, Si, Sn, Ba and Zr.

In one embodiment, the lithium-transition metal oxide includes nickel (Ni), and may further include at least one of cobalt (Co) and manganese (Mn). For example, the lithium-transition metal oxide may include nickel-cobalt-manganese (NCM)-based lithium oxide.

Nickel (Ni) may be provided as a metal associated with the capacity of the lithium secondary battery. The higher the content of nickel, the better the capacity and output of the lithium secondary battery, but if the content of nickel is excessively increased, it may be disadvantageous in terms of mechanical and electrical stabilities.

The conductivity or resistance of the lithium secondary battery may be improved by cobalt (Co), as well as the mechanical and electrical stabilities of the lithium secondary battery may be improved by manganese (Mn).

The chemical structure represented by Formula 1 shows a bonding relationship between elements included in the lattice structure or crystal structure of the cathode active material, and does not exclude other additional elements. For example, M may be provided as a main active element of the cathode active material. Here, it should be understood that Formula 1 is provided to express the bonding relationship between the main active elements, and is a formula encompassing introduction and substitution of the additional elements.

In one embodiment, the the cathode active material may further include auxiliary elements which are added to the main active elements, thus to enhance chemical stability thereof or the crystal structure. The auxiliary element may be incorporated into the crystal structure together to form a bond, and it should be understood that this case is also included within the chemical structure represented by Formula 1.

The binder may include vinylidene fluoride-hexafluoropropylene copolymer (PVDF-co-HFP), polyvinylidene fluoride (PVDF), polyacrylonitrile, polymethylmethacrylate, etc.

The conductive material may include a carbon-based conductive material such as graphite, carbon black, graphene, or carbon nanotubes, etc. and/or a metal-based conductive material such as tin, tin oxide, titanium oxide, or a perovskite material such as $LaSrCoO_3$, and $LaSrMnO_3$, etc.

In some embodiments, the cathode 100 may have an electrode density of 3.0 to 3.9 g/cc, and preferably 3.2 to 3.8 g/cc.

The anode 130 may include an anode current collector 125 and an anode active material layer 120 formed on at least one surface of the anode current collector 125. The anode active material layer 120 may be coated on upper and lower surfaces of the anode current collector 125, respectively.

In some embodiments, an anode slurry may be prepared by mixing the anode active material according to the above-described embodiments with a binder, a conductive material and/or a dispersant in a solvent, followed by stirring the same. The anode current collector 125 may be coated with the anode slurry, followed by drying and pressing the same to form the anode 130.

The anode current collector 125 may include, for example, gold, stainless steel, nickel, aluminum, titanium, copper, or an alloy thereof, and may include, for example, copper or a copper alloy.

As the binder and the conductive material, materials which are substantially the same as or similar to the above-described materials may be used. In some embodiments, a binder for forming an anode may include, for example, an aqueous binder such as styrene-butadiene rubber (SBR) for consistency with the carbon-based active material, and may be used together with a thickener such as carboxymethyl cellulose (CMC).

In exemplary embodiments, the anode 130 may have an electrode density of 1.0 g/cc to 1.9 g/cc.

In some embodiments, a separation membrane 140 may be interposed between the cathode 100 and the anode 130.

The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane may include a nonwoven fabric made of glass fiber having a high melting point, polyethylene terephthalate fiber or the like.

According to exemplary embodiments, an electrode cell is defined by the cathode 100, the anode 130, and the separation membrane 140, and a plurality of the electrode cells may be repeatedly disposed or stacked to form an electrode assembly 150. For example, the electrode assembly 150 may be of a winding type, a stacking type, a z-folding type, or a stack-folding type electrode assembly.

The electrode assembly 150 may be housed within a case, thereby defining the lithium secondary battery.

In one embodiment, an electrolyte may be housed within the case 160 together with the electrode assembly 150.

According to exemplary embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, $\gamma$-butyrolactone, propylene sulfite, tetrahydrofurane, and the like may be used. These compounds may be used alone or in combination of two or more thereof.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the outer case 160.

FIG. 1 illustrates that the cathode lead 107 and the anode lead 127 are formed on the same side of the lithium secondary battery or the case 160, but these electrode leads may be formed on sides opposite to each other. For example, the cathode lead 107 may be formed on one end portion of the case 160, and the anode lead 127 may be formed on the other end portion of the case 160.

The lithium secondary battery may be manufactured, for example, in a cylindrical shape using a can, a square shape, a pouch type or a coin shape.

Hereinafter, embodiments of the present invention will be further described with reference to specific experimental examples. However, the following examples and comparative examples included in the experimental examples are only given for illustrating the present invention and those skilled in the art will obviously understand that various alterations and modifications are possible within the scope and spirit of the present invention. Such alterations and modifications are duly included in the appended claims.

## Examples and Comparative Examples

## Example 1

### 1. Preparation of silicon-based active material

Silicon oxide particles ($SiO_x$, $0<x<2$) were pulverized so that they had a median particle diameter ($D_{50}$) of about 4 $\mu$m to 10 $\mu$m under conditions of a pulverization pressure of 5.5 bar and an input pressure of 7.0 bar through a pulverization process using a jet mill. Petroleum pitch was uniformly mixed using a zero-gravity mixer for about 2 hours to form preliminary particles. The preliminary particles had a softening point of about 200°C to 300°C and a median particle diameter ($D_{50}$) of about 2 $\mu$m to 3 $\mu$m as a carbon coating raw material.

For a carbonization reaction between the preliminary particles and the silicon oxide particles, a carbon coating was formed on the surface of the silicon oxide particles by performing heat treatment in a calcination furnace together with an inert gas ($N_2$, Ar) at a temperature of 950°C. The heat treatment was performed for a period of time of about 1 to 4 hours until the carbonization reaction on the surface of the silicon oxide particles was completed.

Properties of the silicon-based active material were analyzed by the following methods.

### 2. Measurement of onset temperature

An onset temperature of the silicon-based active material was measured using thermogravimetric analysis (TGA).

Specifically, the silicon-based active material was subjected to heat treatment at a heating rate of 5°C/min from 25°C to 450°C in an air atmosphere using a thermogravimetric analyzer (TA instrument). A weight of the silicon-based active material according to the temperature was measured to obtain a TGA graph of the silicon-based active material. A temperature at the point where the weight starts to decrease in the TGA graph of the silicon-based active material was measured to determine the onset temperature.

### 3. Measurement of Ds

Ds of the silicon-based active material was measured using differential thermogravimetric analysis (DTG).

Specifically, the TGA graph of the silicon-based active material was differentiated to obtain a DTG graph of the silicon-based active material. From the DTG graph, a weight change rate a at 350°C (unit: wt%/°C) and a weight change rate b at 450°C were measured. The Ds (dimensionless) was calculated using an equation below.

$$Ds=\{(\text{Weight change rate b-Weight change rate a})/(450°C\text{-}350°C)\}$$

**4. Measurement of content (Cw) of carbon coating**

A content of the carbon coating of the silicon-based active material was measured using the thermogravimetric analyzer (TA instrument).

Specifically, a weight change of the silicon-based active material was measured while performing heat treatment at a heating rate of 5°C/min from 25°C to 900°C in an air atmosphere. A minimum weight of the silicon-based active material in a section of 500°C to 600°C was measured, and a reduction amount of the minimum weight compared to the weight of the silicon-based active material at 25°C was calculated to measure the content (reduction amount) of the carbon coating.

**5. Measurement of specific surface area (BET)**

A specific surface area of the silicon-based active material was measured by the BET method on the basis of nitrogen gas adsorption using a specific surface area measuring device (BELSORP-mini II).

**6. Measurement of particle size distribution**

The silicon-based active material was input into ethanol so as to satisfy the refractive index in a range of 5% to 10%, followed by performing ultrasonic dispersion treatment. A volume particle size distribution curve was measured by measuring a difference in diffraction patterns according to particle size using a laser diffraction particle size measuring device (Matersizer 3000, Malvern).

$D_{min}$ was measured as the smallest particle size in the volume particle size distribution curve, and particle diameters at points where the volume fraction was 10%, 50%, 90% and 99.9% when the particle sizes are accumulated in descending order were measured, respectively, to obtain $D_{10}$, $D_{50}$, $D_{90}$ and $D_{max}$.

**7. Measurement of tap density**

The silicon-based active material was completely dried at a temperature of 100°C. 20 g of the silicon-based active material was input into a 100 ml measuring cylinder, followed by tapping 3,000 times using a density measuring device (Quantachrome, Autotap). After tapping, a tap density was measured by calculating a ratio of the weight to the volume of the silicon-based active material.

Measurement results are shown in Tables 1 and 2 below.

**Example 2**

A silicon-based active material was prepared by the same procedures as described in Example 1 except that the calcination temperature was changed to 850°C when forming the carbon coating, and the properties of the silicon-based active material were adjusted as shown in Tables 1 and 2 below.

**Example 3**

A silicon-based active material was prepared by the same procedures as described in Example 1 except that the calcination temperature was changed to 900°C when forming the carbon coating, and the properties of the silicon-based active material were adjusted as shown in Tables 1 and 2 below.

**Example 4**

A silicon-based active material was prepared by the same procedures as described in Example 3 except that the pulverization pressure and the input pressure were changed to 4.5 bar and 7.5 bar, respectively, during the pulverization process, and the properties of the silicon-based active material were adjusted as shown in Tables 1 and 2 below.

**Examples 5 to 7**

Silicon-based active materials were prepared by the same procedures as described in Example 1 except that the content of the carbon coating was changed as shown in Table 1 below by increasing the amount of the carbon coating raw material input when forming the carbon coating.

## Comparative Example 1

A silicon-based active material was prepared by the same procedures as described in Example 1 except that acetylene was used instead of the petroleum pitch as the carbon coating raw material, and the carbon coating was formed by chemical vapor deposition.

## Comparative Example 2

A silicon-based active material was prepared by the same procedures as described in Comparative Example 1 except that the calcination temperature was changed to 850°C when forming the carbon coating, and the properties of the silicon-based active material were adjusted as shown in Tables 1 and 2 below.

## Comparative Example 3

A silicon-based active material was prepared by the same procedures as described in Comparative Example 2 except that the content of the carbon coating was changed as shown in Table 1 below by increasing the amount of the carbon coating raw material input when forming the carbon coating.

## Comparative Example 4

A silicon-based active material was prepared by the same procedures as described in Comparative Example 1 except that methane was used instead of acetylene as the carbon coating raw material and the carbon coating was formed by chemical vapor deposition.

## Comparative Example 5

A silicon-based active material was prepared by the same procedures as described in Comparative Example 1 except that the pulverization pressure was changed to 4.5 bar during the pulverization process, and the properties of the silicon-based active material were adjusted as shown in Tables 1 and 2 below by increasing the amount of the carbon coating raw material input when forming the carbon coating.

## Comparative Example 6

A silicon-based active material was prepared by the same procedures as described in Comparative Example 5 except that the pulverization pressure was changed to 6.5 bar during the pulverization process, and the properties of the silicon-based active material were adjusted as shown in Tables 1 and 2 below by decreasing the amount of the carbon coating raw material input when forming the carbon coating.

The properties of the silicon-based active materials prepared in the examples and comparative examples were analyzed by the above-described method, and analysis results are shown in Tables 1 and 2 below.

[TABLE 1]

| Item | Onset (°C) | DTG Analysis | | | Cw (wt%) | BET (m²/g) | Tap density (g/cc) |
|---|---|---|---|---|---|---|---|
| | | Weight loss rate (350°C) | Weight loss rate (450°C) | Ds | | | |
| Example 1 | 371.6 | 0.0003941 | 0.006913 | 0.000065 | 1.6 | 1.50 | 1.12 |
| Example 2 | 366.2 | 0.0008165 | 0.008642 | 0.000078 | 5.2 | 1.53 | 0.96 |
| Example 3 | 379.2 | 0.0009386 | 0.010860 | 0.000099 | 2.1 | 2.16 | 1.10 |
| Example 4 | 370.1 | 0.0006048 | 0.0058820 | 0.000053 | 2.9 | 2.30 | 1.08 |
| Example 5 | 383.5 | 0.0010460 | 0.0160100 | 0.000150 | 4.0 | 1.65 | 1.09 |
| Example 6 | 353.3 | 0.0001487 | 0.0015600 | 0.000141 | 5.3 | 1.54 | 1.11 |
| Example 7 | 381.2 | 0.0005940 | 0.0081562 | 0.000076 | 7.8 | 1.21 | 1.22 |

(continued)

| Item | Onset (°C) | DTG Analysis | | | Cw (wt%) | BET (m²/g) | Tap density (g/cc) |
|---|---|---|---|---|---|---|---|
| | | Weight loss rate (350°C) | Weight loss rate (450°C) | Ds | | | |
| Comparative Example 1 | 407.4 | 0.0006272 | 0.018050 | 0.000174 | 3.3 | 1.50 | 1.01 |
| Comparative Example 2 | 408.5 | 0.0008920 | 0.016400 | 0.000155 | 3.9 | 1.88 | 1.17 |
| Comparative Example 3 | 275.1 | 0.0019230 | 0.012210 | 0.000103 | 5.8 | 2.28 | 1.20 |
| Comparative Example 4 | 382.6 | 0.0025890 | 0.054460 | 0.000519 | 5.0 | 1.86 | 1.15 |
| Comparative Example 5 | 423.5 | 0.0101100 | 0.0242200 | 0.000141 | 5.0 | 3.10 | 1.06 |
| Comparative Example 6 | 359.5 | 0.0008961 | 0.0041260 | 0.000032 | 3.0 | 5.70 | 1.05 |

[TABLE 2]

| Item | $D_{min}$ (µm) | $D_{10}$ (µm) | $D_{50}$ (µm) | $D_{90}$ (µm) | $D_{max}$ (µm) | SPAN | Q ($C_W/D_{50}$) |
|---|---|---|---|---|---|---|---|
| Example 1 | 2.6 | 4.3 | 6.5 | 9.7 | 17.4 | 0.85 | 0.25 |
| Example 2 | 2.3 | 3.8 | 6.5 | 8.9 | 17.4 | 0.86 | 0.80 |
| Example 3 | 2.0 | 3.7 | 5.8 | 9.0 | 17.4 | 0.92 | 0.36 |
| Example 4 | 1.6 | 3.6 | 7.4 | 13.3 | 21.2 | 1.31 | 0.39 |
| Example 5 | 1.4 | 3.1 | 5.9 | 11.6 | 30.6 | 1.44 | 0.68 |
| Example 6 | 1.9 | 3.6 | 5.7 | 8.9 | 16.0 | 0.93 | 0.93 |
| Example 7 | 2.0 | 3.8 | 6.8 | 11.4 | 18.8 | 1.12 | 1.15 |
| Comparative Example 1 | 2.0 | 3.3 | 5.0 | 7.4 | 13.3 | 0.82 | 0.66 |
| Comparative Example 2 | 2.3 | 3.8 | 5.7 | 8.5 | 15.2 | 0.84 | 0.68 |
| Comparative Example 3 | 2.0 | 3.3 | 6.0 | 7.3 | 13.3 | 0.80 | 0.97 |
| Comparative Example 4 | 1.7 | 3.1 | 5.1 | 7.1 | 13.3 | 0.85 | 0.98 |
| Comparative Example 5 | 1.6 | 3.1 | 5.0 | 8.2 | 14.5 | 1.02 | 1.00 |
| Comparative Example 6 | 2.8 | 4.4 | 6.3 | 9.2 | 18.3 | 0.76 | 0.48 |

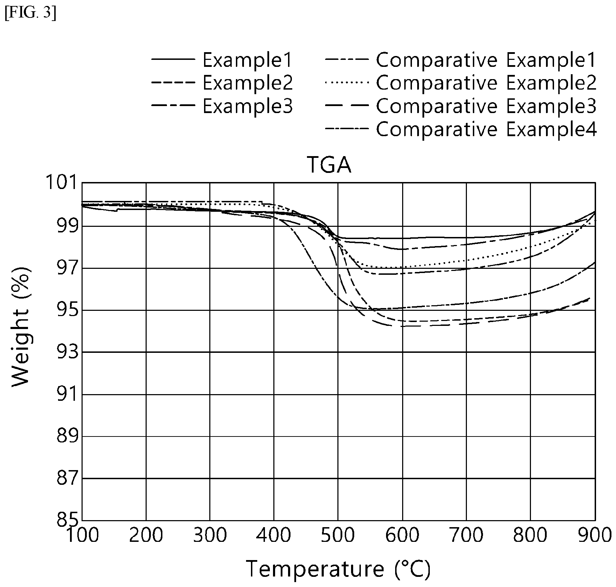

FIG. 3 is a thermogravimetric analysis (TGA) graph of the silicon-based active materials according to Examples 1 to 3 and Comparative Examples 1 to 4.

Referring to FIG. 3, an onset temperature was measured through the starting temperature of a weight change peak of the TGA curve, for example, a temperature at the point where a baseline change is observed.

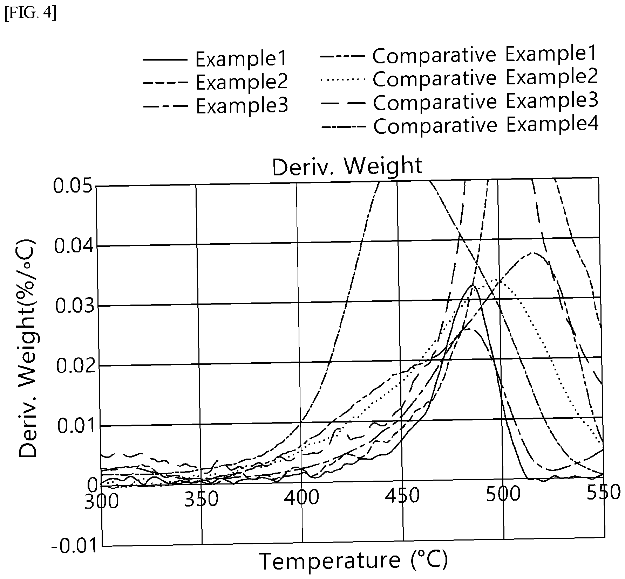

FIG. 4 is a derivative thermogravimetry (DTG) graph of silicon-based active materials according to Examples 1 to 3 and Comparative Examples 1 to 4.

The DTG curve of FIG. 4 was obtained by differentiating the TGA curve of FIG. 3. In FIG. 4, Ds may be measured by measuring a linear slope at the 350°C point and the 450°C point of the DTG curve.

**Experimental Example**

**1. Manufacturing of coin cell**

Coin cells were manufactured using the silicon-based active materials according to the examples and comparative examples as an anode active material.

Specifically, the anode active material, carbon nanotubes (CNTs) as a conductive material, and a PAA-based polymer as a binder were mixed in a weight ratio of 80:10:10 to prepare an anode slurry. The anode slurry was applied to a Cu foil, followed by drying and pressing the same to prepare an anode having a loading amount of 3 mg/cm² (based on a cross-section) and a slurry density of 1.3 g/cc.

A coin cell type secondary battery was manufactured using a Li foil as a counter electrode, and an electrolyte including 1 wt% of FEC and 1.0M $LiPF_6$ mixed solvent (EC:EMC=3:7, volume ratio).

**EP 4 607 611 A1**

**(1) Evaluation of initial capacity and initial efficiency**

The lithium secondary batteries (coin cells) were subjected to charging (CC/CV, 0.1C, 1.5 V, cut-off current 0.01C) and discharging (CC, 0.1C, 0.005 V cut-off) at 25°C, then initial charge capacities and initial discharge capacities were measured. The initial capacity was evaluated as the initial discharge capacity, and the initial efficiency was measured by converting a ratio of the initial discharge capacity to the initial charge capacity into a percentage (%).
Evaluation results are shown in Table 3 below.

[TABLE 3]

| Item | Initial capacity (mAh/g) | Initial efficiency (%) |
|---|---|---|
| Example 1 | 1752.0 | 75.7 |
| Example 2 | 1704.4 | 74.5 |
| Example 3 | 1728.9 | 76.7 |
| Example 4 | 1756.3 | 76.4 |
| Example 5 | 1694.3 | 75.5 |
| Example 6 | 1615.1 | 75.4 |
| Example 7 | 1699.2 | 75.6 |
| Comparative Example 1 | 1671.4 | 75.8 |
| Comparative Example 2 | 1625.6 | 77.2 |
| Comparative Example 3 | 1725.4 | 76.0 |
| Comparative Example 4 | 1696.3 | 77.2 |
| Comparative Example 5 | 1716.2 | 74.8 |
| Comparative Example 6 | 1548.0 | 77.0 |

**2. Manufacturing of full cell**

Anode active materials were prepared by mixing the silicon-based active materials according to the examples and comparative examples and artificial graphite ($D_{50}$: 13 $\mu$m) in a weight ratio of 3 :95. The properties of silicon-based active materials are shown in Table 2 above.
An anode slurry was prepared by mixing the anode active material, carbon nanotubes (CNT) as a conductive material, carboxymethyl cellulose (CMC) as a thickener, and styrene-butadiene rubber (SBR) as a binder were mixed in a weight ratio of 97.2:0.1:1.2:1.5. The anode slurry was applied to a Cu foil, followed by drying and pressing the same to prepare an anode having a loading amount of 5 to 12 mg/cm$^2$ (based on a cross-section) and a slurry density of 1.65 g/cc.
A cathode slurry was prepared by mixing $LiNi_{0.8}Co_{0.1}Mn_{0.1}O_2$ as a cathode active material, carbon black as a conductive agent, and polyvinylidene fluoride (PVDF) as a binder in a weight ratio of 92:5:3. The cathode slurry was applied to an aluminum substrate, followed by drying and pressing the same to prepare a cathode.
The cathode and anode were disposed with a polyethylene (PE) separation membrane (13 $\mu$m) interposed therebetween to form an electrode cell, and the electrode cells were stacked to form an electrode assembly. The electrode assembly was housed in a pouch, and electrode tab parts were fused. An electrolyte including 1 M $LiPF_6$ and a mixed solvent of ethylene carbonate (EC) and ethyl methyl carbonate (EMC) (EC:EMC=30% by volume ("vol%"): 70 vol%) was injected into the pouch, followed by sealing the same to manufacture a secondary battery.

**(1) Evaluation of the formation capacity and formation efficiency**

Each of the lithium secondary batteries (full cells) was subjected to charging (CC/CV, 0.5C, 4.2 V, 0.05C cut-off) and discharging (CC, 0.5C, 2.7 V cut-off) at 25°C, then discharge capacities were measured to determine the formation capacities. The formation efficiency was measured by calculating a percentage (%) of the discharge capacity to the charge capacity.

**(2) Measurement of resistance**

Charge DCIR (resistance) values and discharge DCIR values of the lithium secondary batteries (full cells) were

13

measured using the HPPC (Hybrid Pulse Power Characterization by FreedomCar Battery Test Manual) measurement method.

### (3) Evaluation of output characteristics

Charge output and discharge output characteristics of the lithium secondary batteries (full cells) were measured using the HPPC measurement method.

### (4) Evaluation of low-temperature capacity characteristics

Charging (CC-CV 1.0C 4.2 V 0.05C CUT-OFF) and discharging (CC 1.0C 3.0 V CUT-OFF) were performed on the the lithium secondary batteries (full cells) once each at 25°C to measure room-temperature discharge capacities. Thereafter, charging (CC-CV 1.0C 4.2 V 0.05C CUT-OFF) and discharging (CC 1.0C 3.0 V CUT-OFF) were performed thereon once each at -10°C to measure low-temperature discharge capacities. The low-temperature capacity characteristic was evaluated by converting a ratio of the low-temperature discharge capacity to the room-temperature discharge capacity into a percentage (%).
Evaluation results are shown in Table 4 below.

[TABLE 4]

| Item | Formation capacity (Ah) | Formation efficiency (%) | Discharge resistance (mΩ·s) | Charge resistance (mΩ·s) | Discharge output (W/kg) | Charge output (W/kg) | Low temperature capacity (%) |
|---|---|---|---|---|---|---|---|
| Example 1 | 23.0 | 88.0 | 2.76 | 2.81 | 3720 | 2313 | 86.5 |
| Example 2 | 21.8 | 87.9 | 2.68 | 2.73 | 3800 | 2383 | 87.9 |
| Example 3 | 21.8 | 88.1 | 2.63 | 2.68 | 3845 | 2413 | 86.8 |
| Example 4 | 21.8 | 88.1 | 2.68 | 2.73 | 3778 | 2377 | 88.0 |
| Example 5 | 22.1 | 88.0 | 2.66 | 2.71 | 3816 | 2401 | 87.6 |
| Example 6 | 22.0 | 88.0 | 2.65 | 2.72 | 3848 | 2410 | 87.8 |
| Example 7 | 21.8 | 87.9 | 3.10 | 3.16 | 3315 | 2102 | 80.8 |
| Comparative Example 1 | 21.8 | 87.9 | 2.88 | 2.95 | 3512 | 2219 | 84.9 |
| Comparative Example 2 | 21.8 | 88.0 | 2.89 | 2.94 | 3520 | 2216 | 79.0 |
| Comparative Example 3 | 21.9 | 88.0 | 2.92 | 2.97 | 3488 | 2210 | 81.0 |
| Comparative Example 4 | 21.7 | 87.9 | 2.87 | 2.96 | 3610 | 2568 | 83.3 |
| Comparative Example 5 | 21.8 | 88.0 | 2.89 | 2.94 | 3354 | 2084 | 82.4 |
| Comparative Example 6 | 21.8 | 88.3 | 2.74 | 2.78 | 3658 | 2257 | 83.7 |

Referring to Tables 3 and 4 above, in the case of the examples, the output characteristics and resistance characteristics were improved, while the lithium secondary batteries had high formation efficiency and initial efficiency. In addition, battery characteristics at a low temperature were improved.
However, in the case of the comparative examples, both the charge resistance and discharge resistance of the lithium secondary batteries were increased, and the low-temperature capacity was decreased. In addition, the charge output characteristics and discharge output characteristics were decreased compared to the batteries in the examples.

[Description of Reference Numerals]

100: Cathode
105: Cathode current collector
110: Cathode active material layer
120: Anode active material layer
125: Anode current collector
130: Anode
140: Separation membrane
150: Electrode assembly
160: Case

**Claims**

1. An anode active material comprising:

   a silicon-based active material which comprises core particles and a carbon coating formed on a surface of the core particles to cover at least a portion thereof,
   wherein the silicon-based active material satisfies Equations 1 and 2 below:

   [Equation 1]

   $$350°C < Onset < 390°C$$

   (in Equation 1, the Onset is a starting temperature at which a weight change peak appears in a thermogravimetric analysis (TGA) graph of the silicon-based active material measured at a heating rate of 5°C/min from 25°C to 450°C)

   [Equation 2]

   $$0.000050 \leq Ds \leq 0.000150$$

   (in Equation 2, the Ds is a ratio of a change value of a weight loss rate to a change value of a temperature between 350°C and 450°C measured in a derivative thermogravimetry (DTG) graph of the silicon-based active material obtained through the TGA graph).

2. The anode active material according to claim 1, wherein in Equation 1, the Onset is in a range of $360°C \leq Onset \leq 385°C$.

3. The anode active material according to claim 1 or 2, wherein in Equation 2, the Ds is in a range of $0.000050 \leq Ds \leq 0.000120$.

4. The anode active material according to claim 1 to 3, wherein a content of the carbon coating is 1% by weight to 10% by weight based on a total weight of the silicon-based active material.

5. The anode active material according to claim 1 to 4, wherein Q defined by Equation 3 is greater than 0 and 1.0 or less:

   [Equation 3]

   $$Q = C_W / D_{50}$$

   (in Equation 3, the $C_W$ is a numerical value of a content (% by weight) of the carbon coating based on the total weight of the silicon-based active material, and the $D_{50}$ is a numerical value of a particle diameter at a volume fraction of 50% in a volume particle size distribution of the silicon-based active material).

6. The anode active material according to claim 1 to 5, wherein an SPAN defined by Equation 4 is 1.0 or less:

[Equation 4]

$$SPAN=\{(D_{90}-D_{10})\}/D_{50}$$

(in Equation 4, when the particle diameters are accumulated in descending order in a volume particle size distribution of the silicon-based active material, the $D_{50}$ is a particle diameter at a volume fraction of 50%, the $D_{10}$ is a particle diameter at a volume fraction of 10%, and the $D_{90}$ is a particle diameter at a volume fraction of 90%).

7. The anode active material according to claim 1 to 6, wherein the silicon-based active material has a specific surface area of 1 $m^2/g$ to 3 $m^2/g$.

8. The anode active material according to claim 1 to 7, wherein the silicon-based active material has a median particle diameter of 4 $\mu$m to 10 $\mu$m.

9. The anode active material according to claim 1 to 8, wherein the carbon coating comprises amorphous carbon.

10. The anode active material according to claim 1 to 9, further comprising a carbon-based active material.

11. The anode active material according to claim 10, wherein the carbon-based active material comprises artificial graphite, natural graphite, or a mixture thereof.

12. The anode active material according to claim 10 or 11, wherein a content of the silicon-based active material is less than 50% by weight based on a total weight of the anode active material.

13. The anode active material according to claim 1 to 12, wherein the silicon-based active material has a tap density of 0.90 g/cc to 1.20 g/cc, which is measured by tapping 3,000 times.

14. The anode active material according to claim 1 to 13, wherein the core particles comprise $SiO_x(0<x<2)$.

15. A lithium secondary battery comprising:

an anode which comprises the anode active material according to claim 1 to 14; and
a cathode disposed to face the anode.

EP 4 607 611 A1

[FIG. 1]

[FIG. 2]

17

[FIG. 3]

[FIG. 4]

Europäisches
Patentamt

European
Patent Office

Office européen
des brevets

## EUROPEAN SEARCH REPORT

**Application Number**

EP 25 15 8937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/411844 A1 (OH DOORI [KR] ET AL) 31 December 2020 (2020-12-31) * claims 1-17 * | 1-15 | INV.<br>H01M4/36<br>H01M4/38<br>H01M4/485 |
| X | US 2023/268494 A1 (ZHONG ZEQIN [CN] ET AL) 24 August 2023 (2023-08-24) * claims 1-13 * * paragraphs [0048] - [0050], [0178], [0241], [0242] * | 1-15 | H01M4/587<br>H01M4/62<br>H01M10/0525<br><br>ADD.<br>H01M4/02 |
| A | EP 3 057 157 A1 (SHINETSU CHEMICAL CO [JP]) 17 August 2016 (2016-08-17) * claims 1-21 * | 1-15 | |
| A | US 2023/378445 A1 (YOO SEOK KEUN [KR] ET AL) 23 November 2023 (2023-11-23) * claims 1-15 * * table 1 * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 11 July 2025 | Haering, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 8937

This annex lists the patent family members relating to the patent documents cited in  the above-mentioned European search report.
The members are as contained in the European Patent Office EDP file on
The European Patent Office is in no way liable for these particulars which are merely given for the purpose of information.

11-07-2025

| Patent document cited in search report | Publication date | Patent family member(s) | | Publication date |
|---|---|---|---|---|
| US 2020411844 A1 | 31-12-2020 | KR | 20210000983 A | 06-01-2021 |
| | | US | 2020411844 A1 | 31-12-2020 |
| US 2023268494 A1 | 24-08-2023 | CN | 112310372 A | 02-02-2021 |
| | | US | 2023268494 A1 | 24-08-2023 |
| | | WO | 2022088553 A1 | 05-05-2022 |
| EP 3057157 A1 | 17-08-2016 | CN | 105895892 A | 24-08-2016 |
| | | EP | 3057157 A1 | 17-08-2016 |
| | | JP | 2016152077 A | 22-08-2016 |
| | | KR | 20160100830 A | 24-08-2016 |
| | | TW | 201703319 A | 16-01-2017 |
| | | US | 2016240843 A1 | 18-08-2016 |
| US 2023378445 A1 | 23-11-2023 | CN | 117096297 A | 21-11-2023 |
| | | EP | 4293748 A2 | 20-12-2023 |
| | | KR | 20230161157 A | 27-11-2023 |
| | | US | 2023378445 A1 | 23-11-2023 |

EPO FORM P0459

For more details about this annex : see Official Journal of the European Patent Office, No. 12/82